# EUROPÄISCHE PATENTANMELDUNG

(11) **EP 2 119 348 A1**
(43) Veröffentlichungstag der Anmeldung: **18.11.2009**
(21) Anmeldenummer: 09157546.4
(22) Anmeldetag: 07.04.2009
(51) Int. Cl.: A01K 39/01

(54) **In ein Trägersubstrat eingebettetes Vogelfutter**

(30) Priorität: 11.04.2008 DE 202008005001 U
(71) Anmelder: Holthaus-Giesebrecht, Alexandra, 44532 Lünen (DE)
(72) Erfinder: Giesebrecht, Karl-Ernst, 44532 Lünen (DE)
(74) Vertreter: Dantz, Jan Henning

(57) **Zusammenfassung**

In ein Trägersubstrat eingebettetes, aus Sorten von Körnern und/oder Samen bestehendes Vogelfutter, wobei die Sorten jeweils weitgehend rein schichtweise gelagert sind.

## Beschreibung

Die Erfindung betrifft ein in ein Trägersubstrat eingebettetes, aus Sorten von Körnern und/oder Samen bestehendes Vogelfutter.

Insbesondere zur Fütterung frei lebender Vögel kommt ein solches Vogelfutter zum Einsatz, wobei es üblicherweise als Ring, Stange, Zapfen oder Knödel an geeigneter Stelle aufgehängt wird.

Dabei besteht das vorzugsweise in Talg eingebettete Vogelfutter aus einer Mischung aus Sorten von Körnern wie Sonnenblumenkernen, Kürbiskernen, Nüssen und/oder Samen verschiedenster Art, die jedoch bevorzugt streufähig sind.

Allerdings sind diese Mischungen nicht geeignet, den individuellen Geschmacksbedürfnissen der unterschiedlichen Vogelarten zu genügen. D.h., die Vögel müssen sich mit dem Vogelfutter begnügen, das sie in der Hauptsache weniger gern zu sich nehmen, während das Vogelfutter, das sie besonders lieben, eher zufällig bereit steht.

Eine wirklich artgerechte Fütterung ist daher mit dem bekannten Angebot nicht möglich.

Der Erfindung liegt die Aufgabe zugrunde, ein Vogelfutter der gattungsgemäßen Art so weiterzuentwickeln, dass ein verbessertes, auf die individuellen Geschmacksbedürfnisse abgestimmtes Angebot bereitgestellt wird.

Diese Aufgabe wird durch ein Vogelfutter gelöst, bei dem die Sorten jeweils weitgehend rein schichtweise gelagert sind.

Hierdurch besteht nun die Möglichkeit, die vogelspezifischen Vorlieben zu berücksichtigen, so dass die Vögel das für sie schmackhafteste Vogel futter gezielt aufnehmen können.

Dies schafft andererseits die Möglichkeit ausgewählte Vogelarten zu füttern und an die entsprechende Futterstelle zu locken. So kann je nach Angebot, gezielt auf das Einfinden bestimmter Vogelarten Einfluss genommen werden, wodurch sich, vor allem für den Naturfreund, eine Verbesserung der Hegemöglichkeit ergibt.

Das in Form der genannten beispielsweise Futterstangen oder -zapfen vorliegende Vogelfutter, das in ein Trägersubstrat eingebettet ist, z.B. in den erwähnten Talg, aber auch in andere fettartige Stoffe, kann in unterschiedlichen Kombinationen von Sorten vorliegen.

So sind in der Folge Schichten von Sonnenblumen-, Kürbis- oder Getreidekörnern jedweder Art denkbar oder geeignete Samen, Nüsse oder dergleichen.

Speziell zur Jungvogelfütterung kann beispielsweise eine Schicht von zerkleinerten Nüssen oder Körnern bereitgestellt werden.

Selbstverständlich sind der Kombinationsvielfalt hier bestenfalls Grenzen durch das zu dem Vogelfutter geeignete Angebot an unterschiedlichen Körnern oder Samen gesetzt.

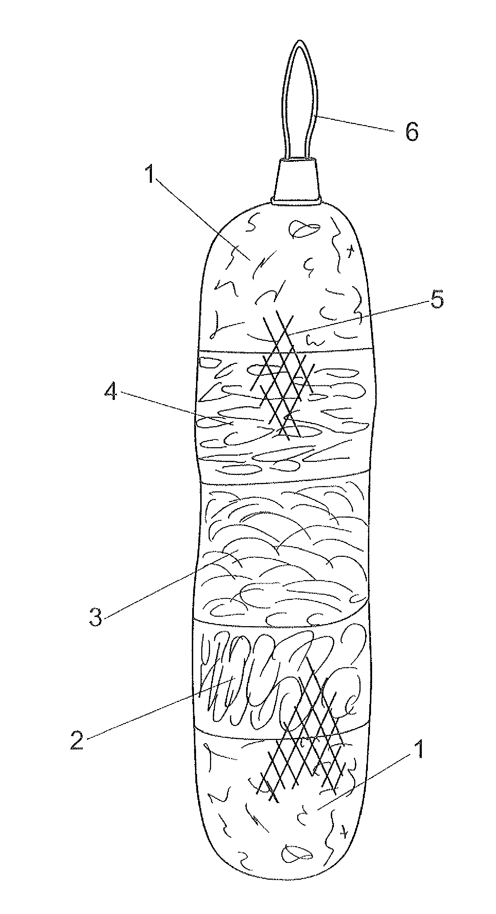

Ein Beispiel der Erfindung wird nachfolgend anhand der beigefügten Zeichnung beschrieben.

Die einzige Figur zeigt einen nach der Erfindung hergestellten Futterzapfen in einer Seitenansicht.

In der Figur ist ein Futterzapfen erkennbar, der in ein Trägersubstrat eingebettete Sorten von Körnern und/oder Samen aufweist, die jeweils, gemäß der Erfindung, weitgehend rein schichtweise übereinander gelagert sind.

Im Beispiel werden die obere und untere Schicht durch Nüsse 1 gebildet, während eine dazwischen angeordnete Schicht aus Sonnenblumenkernen 2 besteht, an der eine Schicht aus Samen 3 anliegt, während eine Schicht aus Sonnenblumenkernen 4 angrenzt.

Der gesamte Futterzapfen ist umhüllt von einem Netz 5, das über eine schlaufenartige Aufhängung 6 an einer geeigneten Stelle frei aufhängbar ist.

## Patentansprüche

1. In ein Trägersubstrat eingebettetes, aus Sorten von Körnern und/oder Samen bestehendes Vogelfutter, **dadurch gekennzeichnet, dass** die Sorten jeweils weitgehend rein schichtweise gelagert sind.

2. Vogelfutter nach Anspruch 1, **dadurch gekennzeichnet, dass** das Trägersubstrat aus Fett besteht und als Stange, Zapfen, Ring oder Knödel geformt ist.

3. Vogelfutter nach Anspruch 1 oder 2, **dadurch gekennzeichnet, dass** das Trägersubstrat aus Talg besteht.

4. Vogelfutter nach einem der vorhergehenden Ansprüche, **dadurch gekennzeichnet, dass** die Sorten aus Sonnenblumen- oder Kürbiskernen, ganzen und/oder gehackten Nüssen bestehen.

5. Vogelfutter nach einem der vorhergehenden Ansprüche, **dadurch gekennzeichnet, dass** die Stange oder der Zapfen von einem Netz (5) umhüllt wird, an dessen einem Ende eine Aufhängeschlaufe (6) angebracht ist.
